# FASCICULE DE BREVET EUROPEEN

(11) **EP 1 993 189 B1**
(45) Date de publication et mention de la délivrance du brevet: **10.03.2010**
(21) Numéro de dépôt: 08162893.5
(22) Date de dépôt: 15.05.2002
(51) Int. Cl.: H02K 11/04, H02K 9/02, H02K 5/20

(54) **Machine électrique tournante, et notamment alternateur de véhicule automobile, comportant un stator monté élastiquement dans une résine thermoconductrice**
Elektrisch umlaufende Maschine, insbesondere Lichtmaschine für Kraftfahrzeug
Rotating electrical machine, in particular alternator for automobile vehicle

(30) Priorité: 15.05.2001 FR 0106386; 08.10.2001 WO PCT/FR01/03095
(43) Date de publication de la demande: 19.11.2008
(62) Demande divisionnaire de: 02732870.7
(73) Titulaire: VALEO EQUIPEMENTS ELECTRIQUES MOTEUR, 94046 Créteil Cedex (FR)
(72) Inventeur: Schulte, Dirk, 94120 Fontenay sous Bois (FR); Hirsou, Daniel, 62180 Rang du Fliers (FR); Le Quere, Eric, 62224 Equihen Plage (FR)
(74) Mandataire: Tran, Chi-Hai

(56) Documents cités:
- EP-A- 0 823 554
- EP-A- 0 969 583
- DE-A- 19 705 228
- US-A- 5 646 838

## Description

### Domaine de l'invention

L'invention concerne une machine électrique tournante, notamment un alternateur pour véhicule automobile, du type comprenant un palier avant et un palier arrière sur lesquels sont fixés des enroulements de stator et dans lesquels est monté rotatif un arbre de rotor, un agencement de redressement comprenant une pluralité de diodes positives supportées par un dissipateur de chaleur en forme générale de plaque de support et une pluralité de diodes négatives supportées par un élément de support en forme de plaque, ces plaques étant axialement juxtaposées en étant fixées sur le palier arrière, et un dispositif de refroidissement par circulation d'un courant axial d'un fluide de refroidissement, tel que de l'air, à travers des ouvertures axiales dans lesdites plaques, au moins certaines ouvertures dans la plaque de support des diodes positives étant pourvues de nervures de refroidissement. Avantageusement la plaque de support des diodes négatives fait partie du palier arrière.

### Etat de la technique

Une machine électrique de ce type est décrite dans le document DE-A-19705228. Les ouvertures qui sont pratiquées dans la plaque de support des diodes positives comportent cinq ouvertures d'une étendue angulaire importante dont deux d'une forme générale trapézoïdale. Ces ouvertures trapézoïdales sont entourées chacune par une nervure faisant saillie axialement de la plaque.

Ce dispositif de refroidissement à ouvertures axiales assure certes un refroidissement plus efficace que les dispositifs de refroidissement sans ouvertures axiales, mais n'est cependant pas encore satisfaisant.

Il en est de même du dispositif de refroidissement décrit dans le document US-A-5,646,838.

Dans ce document la plaque de support des diodes positives comporte un grand nombre de nervures qui présentent la forme d'ailettes s'étendant sensiblement radialement sur la plaque ; une ouverture de passage d'air de refroidissement étant prévue entre chaque paire d'ailettes adjacentes. Les ailettes s'étendent à partir du bord interne de la plaque de support et à distance de la périphérie externe de la plaque et des diodes positives ; la plaque étant plus épaisse au niveau des ailettes.

### Objet de l'invention

La présente invention a pour but d'améliorer le refroidssement d'une machine tournante du type indiqué plus haut.

A cet effet, l'invention a pour objet une machine électrique tournante telle qu'énoncée à la revendication 1.

Selon une autre caractéristique de l'invention, au moins deux diodes positives sont disposées près de la périphérie extérieure de la plaque de support des diodes positives et des secondes ailettes s'étendent jusqu'au dites diodes à proximité de celles-ci. Grâce à cette disposition les ouvertures peuvent être managées radialement en dessous des diodes et l'épaisseur de la plaque peut être augmentée au niveau des diodes pour mieux refroidir celles-ci. En outre les secondes ailettes participent au refroidissement.

Selon encore une autre caractéristique de l'invenion, les ouvertures dans la plaque de support des diodes positives constituent avec les ailettes qui les délimitent des canaux d'écoulement accéléré de l'air de refroidissement.

Avantageusement au moins une première ailette est à proximité d'une diode positive pour encore mieux refroidir celle-ci.

Avantageusement la machine électrique tournante comporte une partie de capot qui comporte au niveau des ailettes de la de la plaque de support des diodes positives des ouvertures radiales correspondantes à celles de la plaque de support des diodes positives.

Ces ouvertures sont délimitées par des bandes de matière ou nervures radiales étroites. L'épaisseur de ces nervures est fonction de l'épaisseur des ailettes ; les nervures étant disposées en dessous des ailettes. On obtient une communication entre les ouvertures du capot et celles de la plaque de support des diodes positives.

Les ouvertures du capot ont une étendue radiale supérieure à celles de la plaque de support des diodes positives.

Avantageusement les ouvertures du capot sont divisées en deux à la faveur de bande de matière ou nervures coaxiales, c'est à dire circonférentielles. Une première partie des ouvertues du capot est en regard des ouvertures de passage de la plaque de support des diodes positives, la deuxième partie des ouvertures étant implantée à la périphérie externe du capot.

### Brève description des dessins

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'un agencement de redressement connu, monté sur le palier arrière d'un alternateur pour véhicule automobile;
- la figure 2 est une vue axiale de la face interne du palier selon la figure 1 ;
- la figure 3 est une vue en coupe axiale d'une machine électrique tournante sous la forme d'un alternateur équipé d'un agencement de redressement selon l'invention ;
- la figure 4 est une vue en perspective partielle de l'agencement de redressement de la figure 3 sans le capot ;
- la figure 5 est une vue en perspective d'un dissipateur de chaleur de l'agencement de redressement selon la figure 4 ;
- la figure 6 est une vue de dessus du dissipateur selon la figure 5 ;
- la figure 7 est une vue de dessus d'une plaque intermédiaire isolante de l'agencement de redressement selon la figure 4 ;
- la figure 8 est une vue en perspective, d'un capot de protection destiné à coiffer l'agencement de redressement selon la figure 4, et
- la figure 9 est une vue en perspective d'un palier arrière d'alternateur, à capot de protection intégré, selon un autre mode de réalisation de l'invention.

### Description de modes préférentiels de réalisation de l'invention

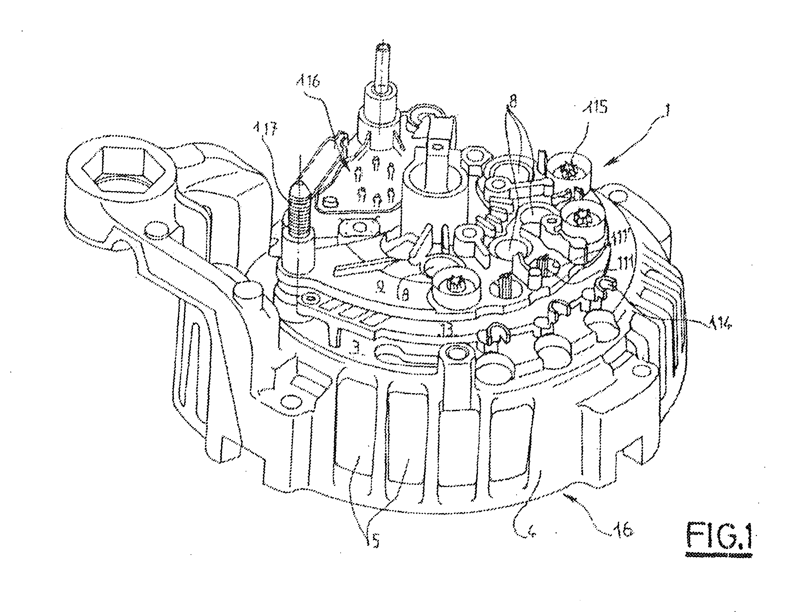

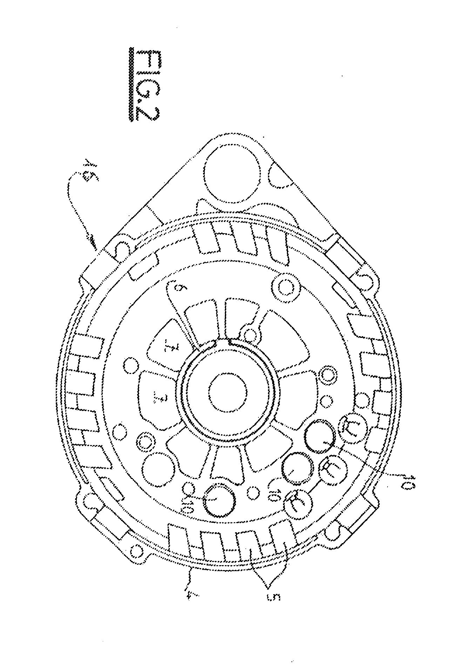

Pour faciliter la compréhension de l'invention et le contexte dans lequel celle-ci s'inscrit, on décrira tout d'abord, en se référant aux figures 1 et 2, la structure générale classique d'un agencement de redressement et sa disposition dans un alternateur polyphasé pour véhicule automobile du type décrit par exemple dans le document EP-B-0515259 (US-A-5270605) auquel on se reportera pour plus de précisions.

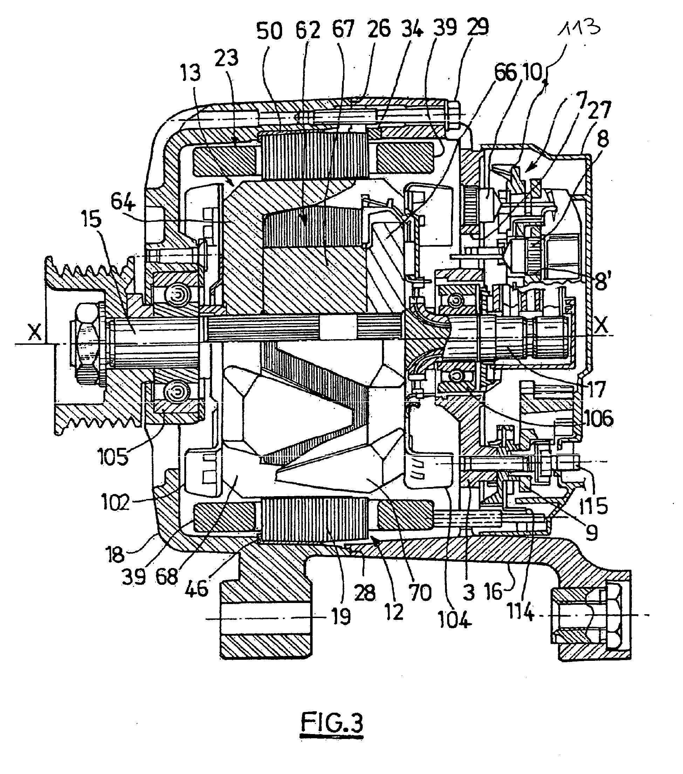

Comme le montre la figure 1, un agencement de redressement désigné par le numéro de référence 1 est fixé sur le palier arrière 16 de l'alternateur. Ce palier arrière porte, dans l'alternateur, avec un palier avant approprié, l'arbre de rotor et le stator de l'alternateur. Ces paliers appartiennent à un carter de support fixe de l'alternateur destiné à être fixée sur une partie fixe du véhicule automobile. C'est pour cette raison que le palier 16 présente une oreille. Ces paliers sont électriquement conducteurs en étant classiquement à base d'aluminium et reliés à la masse. Le stator comporte un corps de stator dans lequel sont fixés les enroulements de stator dont les sorties sont reliées à l'agencement de redressement décrit ci-après. Le palier arrière 16 présente la forme générale d'une coupelle comportant une partie formant plateau central 3 d'orientation transversale et un rebord annulaire extérieur 4 d'orientation axiale comportant des ouvertures latérales 5 de sortie de l'air de refroidissement qui a été aspiré par un ventilateur interne assorti au rotor de l'alternateur visible à la figure 3.

Le palier 16 comprend une âme cylindrique centrale 6 de logement, par l'intermédiaire d'un roulement à billes, de l'arbre de rotor. Le plateau 3 est pourvu autour de l'âme 6 d'ouvertures d'entrée d'air 7 destinées au passage de l'air de refroidissement de l'alternateur.

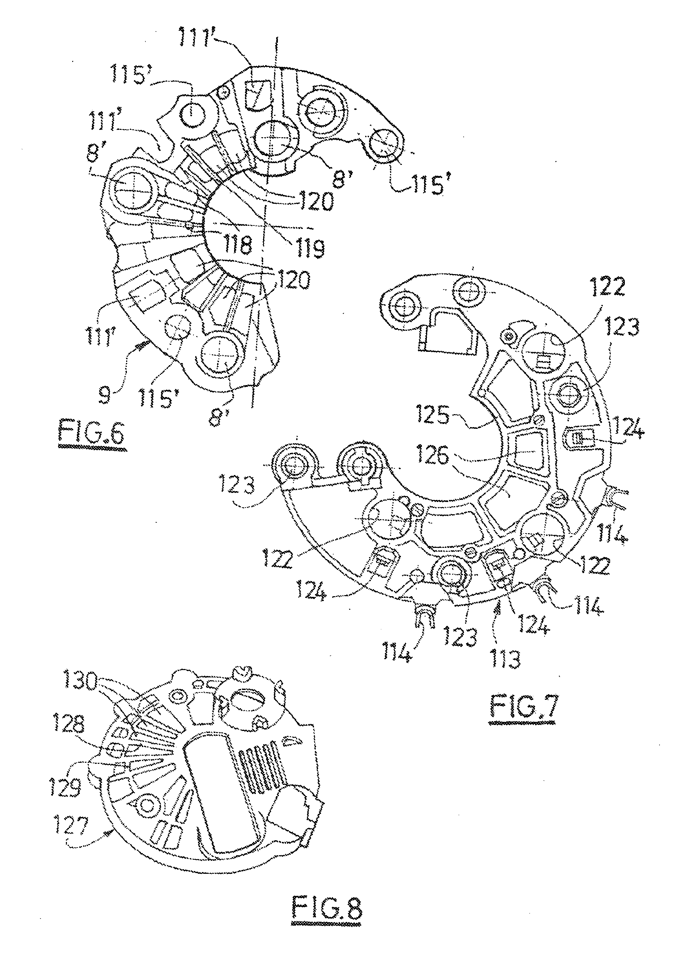

L'agencement de redressement comprend trois paires de diodes positives et négatives, une diode positive étant doublée. Les diodes sont du type à corps cylindrique constituant une borne de connexion, tandis que la seconde borne est constituée par une queue s'étendant axialement à partir de ce corps. Pour une réduction de l'encombrement axial les diodes positives et négatives sont montées tête bêche, les queues des diodes positives pénétrant dans les ouvertures 7. Les diodes positives indiquées en 8 sont emmanchées à force par leur corps cylindrique dans un support-dissipateur de chaleur en forme générale d'une plaque 9. Les diodes négatives 10 sont emmanchées à force par leur corps cylindrique dans la zone annulaire du plateau 3 du palier arrière 16, qui entoure la portion comportant les ouvertures susmentionnées 7. Les queues désignées par 111 des diodes négatives traversent des trous 111' pratiqués dans la plaque support 9 des diodes positives 8. Cette plaque 9 est séparée du plateau 3 du palier 16 par un corps en forme générale de plaque intermédiaire 113 en un matériau électriquement isolant, surmoulé sur un ensemble de conducteurs plats. Cette plaque intermédiaire isolante 113, grâce à ses conducteurs plats, forme avec les diodes positives et négatives un pont redresseur pour redresser le courant à la sortie des enroulements de stator. Ces enroulements sont agencés pour former les phases de stator et comportent des conducteurs électriques reliés à la plaque intermédiaire isolante 113. Ainsi le numéro de référence 114 désigne les éléments en forme de pince-fils pour le passage de ces conducteurs destinés à relier les phases et le neutre du stator triphasé de l'alternateur à l'agencement de redressement. La plaque 9 de support des diodes positives 8 et la plaque intermédiaire isolante 113 sont axialement juxtaposées et fixées à isolation électrique par des vis 115 au palier 16. Pour compléter la description, des numéros de référence 116 et 117 désignent respectivement le dispositif électronique de régulation de l'alternateur et la borne de sortie de l'alternateur qui est connectée au support dissipateur 9 et au réseau de bord du véhicule automobile, ainsi qu'à la borne positive de la batterie. La plaque 9 est métallique. Bien entendu un capot en matière plastique recouvre l'agencement de redressement 1. Ce capot est agencé pour permettre une circulation de l'air en étant fixé sur le palier arrière. Un tel capot est visible dans les figures 3 et 8 et est également en forme de coupelle.

En se référant aux figures 3 à 9 on décrira ci-après les mesures constructives proposées, conformément à l'invention, pour optimiser le refroidissement de l'agencement de redressement. On utilisera les mêmes références pour les éléments identiques ou similaires à ceux montrés sur les figures 1 et 2. L'agencement de redressement 1 selon l'invention est avantageusement applicable aux alternateurs de véhicules automobiles ou aux machines électriques de type "alterno-démarreurs" connues en soi, qui sont aptes à fonctionner alternativement comme moteur électrique notamment de démarreur ou comme alternateur. Pour plus de précisions, on se reportera à la demande FR-0003131 déposée le 10 mars 2000 et publiée sous le numéro FR-A- 2 806 223 ou au document WO 01/69762. Cet alterno-démarreur a la structure d'un alternateur classique et présente des moyens de suivi, avantageusement du type magnétique, de la rotation du rotor pour injecter du courant dans le bobinage du stator au moment désiré lorsque la machine fonctionne en mode démarreur.

On a représenté à la figure 3 un alternateur 10 compact à ventilateurs internes 102, 104 équipé d'un agencement de redressement selon l'invention.

Cet alternateur, ici du type multiphasé, est constitué principalement d'un carter de support en deux portions 16, 18 ajourées pour circulation de l'air. Le carter porte intérieurement deux organes principaux qui sont le stator 12 et le rotor 13 comme décrit par exemple dans le document US A 527 605 ( EP B 0 515 259) auquel on se reportera pour plus de précisions.

Le stator 12 entoure le rotor 13 qui est solidaire d'un arbre 15 sur l'extrémité arrière duquel sont fixées deux bagues collectrices 17, tandis qu'une poulie (non référencée) est solidaire de l'extrémité avant de l'arbre 15. Cette poulie est destinée à recevoir une courroie faisant partie d'un dispositif de transmission de mouvement entraîné par le moteur à combustion interne du véhicule automobile. L'axe X-X constitue l'axe de l'arbre 15 et l'axe de symétrie axiale de l'alternateur.

Le stator 12 est composé d'un corps 19 qui est ici constitué principalement par un empilement axial de tôles transversales en fer doux. De manière connue en soi, les tôles du stator 12 comportes chacune des encoches pour formation de rainures ici axiales. Ces encoches débouchent à la périphérie interne du corps 19 de forme cylindrique.

Les encoches s'étendent radialement vers l'extérieur et reçoivent des brins axiaux électriquement conducteurs d'un bobinage électrique d'induit 23. Les rainures sont semi-fermées vers l'intérieur comme visible par exemple dans le document FR A 2 603 429.

Le bobinage électrique 23 est, pour chaque phase de l'alternateur, constitué par exemple par l'enroulement en spires d'un fil électriquement conducteur, ici un fil de cuivre, qui est revêtu d'au moins une couche en matériau isolant électrique par exemple un polyester en deux couches l'une du type polyimide, l'autre du type polyamide imide.

Une feuille isolante électrique est interposée dans chaque encoche du corps 19 du stator 12 entre le bobinage électrique 23 et le corps 19 du stator 12.

Cette feuille isolante est immobilisée décrite dans le document WO 02/29958 pour réduire les bruits et le niveau sonore de l'alternateur 10, permet de diminuer ou de supprimer les risques de court-circuit entre le bobinage 23 et le corps 19.

Du fait de l'enroulement du fil électriquement conducteur, le bobinage 23 comporte donc dans chaque encoche du corps 19 du stator 12 un faisceau d'éléments électriquement conducteurs, qui traversent axialement les encoches du corps 19 et sont prolongés à l'extérieur du corps 19 par des brins de jonction qui forment des chignons 39 s'étendant en saillie de part et d'autre de ce corps 19 conformément à la figure 3.

En variante, il est fait appel à des épingles de section circulaire ou rectangulaire montées dans les encoches formant les rainures axiales du stator 12 comme décrit dans le document WO-92/06527. En variante quatre éléments électriquement conducteur, tels que des épingles de section rectangulaire en forme de U, sont montés radialement à superposition par encoche comme décrit dans le document FR-A- 2 819 117. Dans tous les cas le stator 12 présente des enroulements constituant le bobinage 23. Ces enroulements de stator sont fixés sur les portions 16, 18 d écrites ci-après.

Le rotor 13 inducteur est ici un rotor à griffes du type Lundel, qui est constitué par un bobinage électrique 62 cylindrique qui est monté entre deux plateaux 64 et 66 métalliques comportant chacun des griffes 68 et 70 respectivement, qui s'étendent axialement en direction de l'autre plateau 66 et 64. Chaque ensemble plateau-griffes constitue une roue polaire ici en acier magnétique. Un noyau 67, ici également en acier magnétique, est intercalé axialement entre les plateaux 66,64 pour porter le bobinage 62. Le noyau 67 est de forme annulaire d'orientation axiale en étant ici en forme d'une rondelle épaisse. Ce noyau 67 est distinct des roues polaires pour faciliter l'enroulement de l'élément électriquement conducteur sur le noyau 67 sans que les griffes 68,70 gênent. Chaque roue polaire est fixée sur l'arbre 15 à la faveur de parties moletées de l'arbre, dont une sert à la fixation du noyau 67. Les griffes 68 et 70 sont décalées angulairement l'une par rapport à l'autre de façon qu'une griffe 68 du plateau 64 s'intercale entre deux griffes 70 adjacentes du plateau 66, et inversement. Les griffes présentent des chanfreins (non référencés) pour réduire les bruits magnétiques comme dans le document EP-B-0.515.259.

L'alternateur est ici à ventilation interne, chaque plateau 64,66 portant un ventilateur respectivement 102,104 adjacent à la portion 16, 18 concernée du carter. Chaque portion 18, 16 de carter 12 est ajourée pour circulation de l'air et porte centralement un palier sous la forme d'un roulement à billes respectivement 105, 106 pour support respectivement de l'extrémité avant et arrière de l'arbre 15. Ainsi l'une 18 de ces portions 16, 18 est appelée palier avant (celle adjacente à la poulie) et l'autre 16 palier arrière. On notera que cette poulie est fixée par un écrou sur l'extrémité avant filetée de l'arbre 15. Dans la partie supérieure de la figure 3 une entretoise de section en forme d'équerre est intercalée entre la bague interne du roulement 105 et la poulie. Dans la partie inférieure de cette figure 3 l'entretoise est intégrée à la poulie ce qui permet de réduire encore l'encombrement axial.

Les paliers 16, 18 ont une forme creuse et comportent chacun un fond en forme de plateau d'orientation transversale par rapport à l'axe X-X de l'alternateur et à leur périphérie externe un rebord annulaire d'orientation axiale comportant chacun une face radiale annulaire d'extrémité usinée concernée 26, 28 délimitant un plan de joint. Les paliers sont reliés entre eux par des vis de fixation 29.

Chaque rebord d'orientation axiale se raccorde à son autre extrémité axiale au plateau d'orientation transversal portant centralement le roulement à billes 105, 106 concerné. De manière connue chaque plateau et chaque rebord comporte respectivement des ouvertures d'entrée d'air et des ouvertures de sortie d'air pour la circulation de l'air. A la figure 3 on voit certaines des ouvertures d'entrée d'air réalisées dans les plateaux des paliers 16, 18, en particulier les ouvertures 7 réalisées dans le plateau 3 du palier arrière 16, et on a représenté en pointillés deux ouvertures de sortie d'air, du type de l'ouverture 4 de la figure 1, des rebords périphériques des paliers 16, 18.

Les ouvertures de sortie d'air des rebords sont implantées en regard des chignons 39.

Les ventilateurs 102,104 sont implantés radialement en dessous des chignons 39 en étant fixés, par exemple par soudure par points, respectivement au plateau 64 et au plateau 66. Ces ventilateurs 102, 104, solidaires du rotor 13, comportent des pales réparties avantageusement de manière irrégulière pour réduction des bruits et sont ici du type centrifuge. L'air est ainsi aspiré et traverse les ouvertures des plateaux pour être refoulé à travers les ouvertures, ici de forme oblongue, des rebords périphériques.

Les ventilateurs peuvent comporter deux séries de pales comme décrit dans le document FR00 08549 déposé le 30 juin 2000 et publié sous le numéro FR-A- 2 811 156.

Plus précisément la deuxième série de pales est plus courte que la première série de pales et au moins une deuxième pale est intercalée entre deux pales consécutives de la première série de pales.

Pour plus de précisions on se reportera à ce document. Toutes les variantes de ce document étant envisageables. Ainsi un couvercle peut recouvrir la première série de pales.

Les chignons 39 sont donc bien refroidis ainsi que l'agencement de redressement 1, le régulateur de tension 116 que comporte l'alternateur 10 et les roulements à billes 105, 106.

Le palier arrière 16 porte un agencement de redressement 1 du courant alternatif produit par le bobinage 23 du stator 12, ici triphasé, et un porte-balais coopérant avec les bagues collectrices 17. Grâce à l'agencement 1 le courant alternatif produit par le bobinage 23 est transformé en courant continu pour recharger la batterie du véhicule et alimenter les consommateurs, tels que le dispositif d'éclairage, le dispositif de climatisation etc.

De manière connue les bagues collectrices 17 sont reliées aux extrémités du bobinage d'excitation 62 du rotor 13 par des liaisons filaires passant derrière le ventilateur 104, comme visible dans cette figure 3. Lorsque le bobinage 62 est activé il est formé de manière connue des pôles magnétiques au niveau des griffes 68,70.

Il est en outre prévu un capot de protection 27 ajouré de manière décrite ci-après pour circulation de l'air

Ce capot 27, ici en matière plastique, coiffe le porte-balais, connecté de manière connue au régulateur de tension 116, et l'agencement de redressement doté de diodes.

Les balais du porte-balais coopèrent par frottement contre les bagues 17. Le dispositif de régulation permet de limiter la tension fournie par le stator pour notamment protéger la batterie

Les paliers 16, 18 comportent des pattes pour leur fixation sur une partie fixe du véhicule et sont reliés entre eux à fixation ici à l'aide de vis dont l'une est visible à la figure 3. L'alternateur du véhicule est donc relié électriquement à la masse via ses paliers 16, 18.

En variante les plateaux des paliers sont inclinés axialement.

En variante le ventilateur 102 est supprimé sachant que le ventilateur arrière est plus puissant.

D'une manière générale l'alternateur comporte au moins un ventilateur interne solidaire du rotor 13 et implanté à l'intérieur du carter en dessous d'un chignon 39 en sorte que le bobinage 23 est bien refroidi et que l'alternateur est de forte puissance tout en étant compact notamment axialement et peut bruyant.

En variante un unique ventilateur est implanté à l'extérieur au niveau de la poulie.

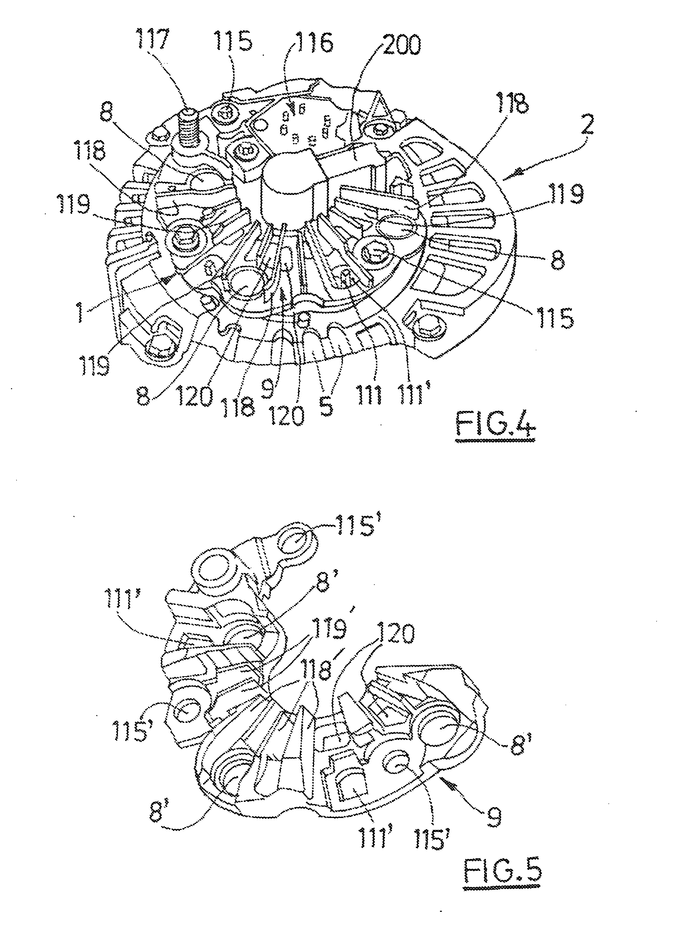

L'invention concerne notamment la réalisation de la plaque 9 formant support des diodes positives 8 et constituant un dissipateur de chaleur. Suivant une caractéristique cette plaque 9 est agencée pour assurer une meilleure dissipation de chaleur et sera appelée dissipateur de chaleur. Comme on le voit sur les figures 4 à 6, l'agencement de redressement selon l'invention peut se contenter de trois diodes positives 8, en raison de l'optimisation du refroidissement procuré par l'invention. Différemment de la figure 1, deux de ces diodes 8 sont disposées près de la périphérie externe de la plaque, sensiblement sur le même cercle que les trous 111' des queues 111 des diodes négatives et les vis 115 de fixation de l'agencement de redressement sur le palier arrière. La troisième diode est disposée au voisinage de la borne 117, dite borne positive. Plus précisément la plaque présente un prolongement au voisinage de la borne 117 pour sa fixation sur le plateau 3.

Les trous dans lesquels sont emmanchés à force les diodes portant la référence 8' et les trous de passage des vis 115 sont indiqués en 115'. Comme on le voit clairement sur les figures, la partie centrale du dissipateur 9 est ainsi dégagée.

La face supérieure du dissipateur 9 porte une multitude d'ailettes 118, 119 qui font saillie perpendiculairement de la face de la plaque et s'étendent sensiblement radialement à partir du bord radialement interne de la plaque, les ailettes 118, dites premières ailettes, allant suivant une caractéristique de l'invention pratiquement jusqu'à la périphérie externe de la plaque dissipatrice, les autres ailettes 119, dites secondes ailettes, jusqu'aux trous de réception des diodes, des vis de fixation et de passage des queues des diodes négatives.

Ici certaines des secondes ailettes 119, plus courtes que les premières ailettes 118, s'étendent suivant l'invention à proximité des diodes positives 8 disposées à la périphérie externe de la plaque 9 pour un bon refroidissement de celle-ci. D'autre des secondes ailettes 19 s'étendent jusqu'à proximité des vis de fixation 115.

On constate que la diode positive médiane 8 est située entre deux ailettes longues 118, conformées à leur périphérie externe pour entourer le plus possible la diode médiane 8, et qu'une des ailettes longues 118 est à proximité des deux autres diodes 8. Les ailettes 18, associées à la diode positive médiane 8, sont recourbées à leur périphérie externe l'une en direction de l'autre pour mieux entourer cette diode médiane. Dans l'exemple représenté, douze ailettes 118, 119 sont prévues sur le dissipateur en forme de plaque 9. Des ailettes sont prévues sur les deux faces de la plaque. La figure 5 fait apparaître que certaines ailettes présentent une largeur plus importante pour augmenter la masse de la plaque 9.

Plus précisément, pour encore mieux évacuer la chaleur, la face inférieure, tournée vers le plateau 3, de la plaque 9 est dotée d'ailettes longues 119' et courtes 118' comme la face supérieure. Certaines des ailettes 119',118' ont une largeur importante.

Comme le montre clairement les figures, la plaque est percée entre les ailettes dans l'aire disponible. Ces ouvertures 120 constituent avec les ailettes radiales 118, 119 convergentes vers l'intérieur, des canaux axiaux de refroidissement qui assurent un écoulement accéléré de l'air de refroidissement aspiré par le ventilateur interne et ensuite refoulé à travers les ouvertures latérales 5 du palier.

La figure 7 illustre la plaque intermédiaire isolante 113 qui comporte, de la manière correspondant à la plaque 9 de support des diodes positives, des trous de passage 122 des queues des diodes positives 8, des trous de passage 123 des vis de fixation 115 et des trous de passage 124 des queues de passage des diodes négatives 10, tous dans la zone annulaire extérieure près de sa périphérie, la partie annulaire 125 située plus à l'intérieur étant pourvue de larges ouvertures 126 d'écoulement de l'air de refroidissement et dont la disposition correspond aux ouvertures 120 de la plaque 8. Dans le cadre de l'invention il pourrait être envisagé de supprimer cette partie annulaire 125 de la plaque isolante 113, ce qui permet de réduire la taille de cette plaque intermédiaire isolante 113.

De manière connue les têtes des vis 115 prennent appui sur le fond d'un logement appartenant à la plaque intermédiaire isolante 113 pour serrer la plaque 9 au contact de la plaque intermédiaire isolante 113.

La figure 8 montre un capot de protection 27 en forme de coupelle destinée à coiffer l'agencement de redressement selon l'invention, qui se distingue par sa configuration optimisée, parfaitement adaptée au dissipateur du fait que sa partie située au-dessus de celui-ci est fortement ajourée en ne laissant subsister que des nervures radiales étroites 128 et une nervure coaxiale également étroite 129. Les ouvertures 130 importantes ainsi obtenues, qui s'étendent radialement comme les ailettes de refroidissement 119, 118 assurent un écoulement accéléré purement axial de l'air de refroidissement aspiré et ainsi un refroidissement optimal de l'agencement de redressement de l'alternateur selon l'invention. On notera que c'est uniquement la partie formant le plateau central d'orientation transversale du capot 27 qui est doté des ouvertures, le rebord annulaire d'orientation axiale du capot, se raccordant à la périphérie externe du plateau central, étant dépourvu d'ouvertures. L'air passe donc axialement à travers les ouvertures 130 et 120, sachant que les ouvertures 120 sont en vis-à-vis des ouvertures 7 du palier arrière.

On notera que l'épaisseur des nervures, ou bande de matière, radiale 128 est fonction de l'épaisseur des ailettes 118,119 en étant ici globalement égale à celles-ci. Les nervures 128 sont en regard des ailettes 118,119.

Ici la nervure ou bande de matière 129 est circulairement continue en sorte que les ouvertures 130 sont divisées en deux. Une première partie des ouvertures 130 est en regard des ouvertures 120 de la plaque 9 en ayant avantageusement chacune une longueur ou hauteur radiale supérieure à celle d'une ouverture 120. La nervure 129 s'étend au-dessus des ouvertures 120 en sorte que la deuxième partie des ouvertures 130 est en regard notamment des deux diodes positives 8 implantées à la périphérie externe de la plaque 9.

La plaque 9 est ainsi bien refroidie et le capot 27 plus résistant. De manière connue le capot 27 est fixé par encliquetage sur les vis 115 pourvues d'une partie filetée à cet effet comme décrit dans le document WO01/69762.

Le rebord annulaire d'orientation axiale du capot 27 est ici dépourvu d'ouvertures.

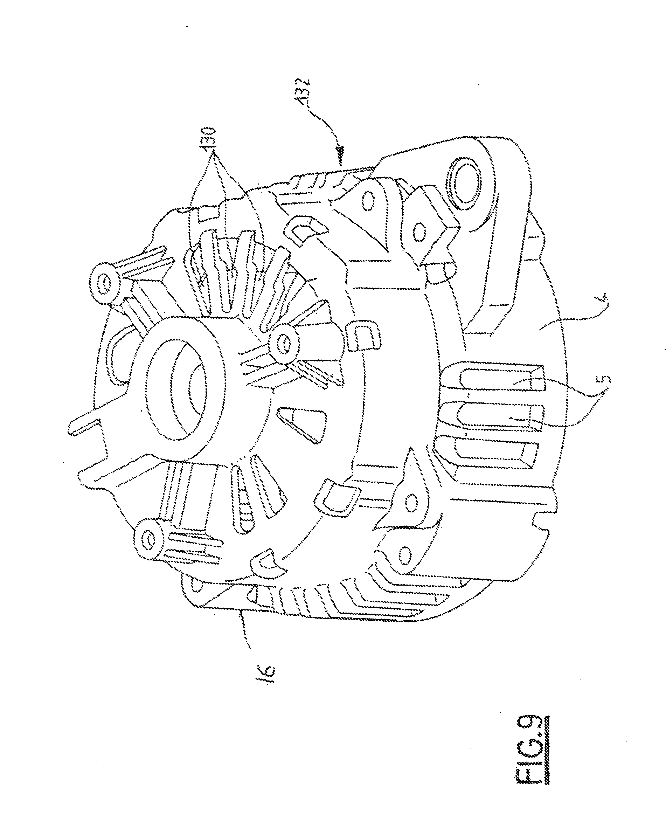

La figure 9 illustre une version 132 intégrée de l'ensemble formé par le palier arrière et le capot de protection de l'agencement de redressement, avec des ouvertures d'écoulement axial 132 dans la partie coiffant le dissipateur de l'agencement de redressement qui est fixé à l'intérieur de l'ensemble. Dans ce cas les diodes négatives sont montées sur une plaque ayant la configuration du plateau 3 de la figure 1. Cette plaque est fixée sur le palier arrière par tout moyen, sachant que ce palier arrière 16 est relié à la masse. Le capot 132 présente alors avantageusement des surépaisseurs en forme de nervures issues d'une portion tubulaire s'étendant en saillie axiale par rapport à la partie centrale du capot constituant le fond du palier arrière. Ces nervures sont reliées à leur extrémité libre à des cheminées de fixation. Ainsi l'alternateur peut entraîner par l'intermédiaire de son arbre de rotor une pompe à vide. Par simplicité les nervures, la portion tubulaire et les cheminées de fixation n'ont pas été référencées.

Dans tous les cas l'agencement de redressement comporte un dissipateur 9 en forme de plaque trouée à ailettes radiales, une plaque intermédiaire isolante 113 à connecteurs et un troisième constituant le support des diodes négatives formé par le palier arrière ou une plaque solidaire du palier arrière. Il est donc fait appel à trois pièces principales contrairement au mode de réalisation décrit dans le document DE-A-19705228 précité dans lequel le connecteur est monté au-dessus de la plaque portant les diodes positives et gène la ventilation. Dans la présente invention la plaque intermédiaire isolante 113 est intercalée entre la dissipation 9 et le plateau 3 du palier arrière ou une plaque solidaire de celui-ci. Des canaux radiaux sont formés entre les ailettes. Les queues des diodes positives sont dirigées vers le support des diodes négatives. Deux ou moins des diodes positives s'étendent au-dessus des ouvertures 120.

Il ressort de la description de l'invention qui vient d'être faite, que grâce aux ailettes radiales et des ouvertures établies entre elles, du dissipateur support des diodes positives, on obtient un écoulement accéléré et ainsi optimisé de l'air de refroidissement, auquel contribuent les ouvertures prévues en vis-à-vis dans le palier et dans la plaque isolante formant connecteur. Etant donné que les diodes positives sont disposées près de la périphérie extérieure de la plaque de support, le connecteur peut avoir une taille réduite. Il est à noter que toutes les ouvertures sont configurées de sorte qu'ils réduisent des pertes de charge en facilitant l'écoulement de l'air. Il est encore à souligner que les ouvertures dans le capot sont alignées avec les ailettes du dissipateur support des diodes positives.

Le fait que les ailettes 118, 119 convergent vers l'intérieur permet d'accélérer l'écoulement du fluide de refroidissement ici de l'air en variante un autre fluide. Le dispositif de deux des diodes positives à la périphérie externe du dissipateur 9 permet d'augmenter l'épaisseur du dissipateur 9 à cet endroit, en créant sur celui-ci par exemple une surépaisseur de section globalement trapézoïdale. Ainsi on évacue mieux la chaleur et la plaque 9 est rigidifiée. Avantageusement la dissipation 9 est obtenue par moulage en étant à base d'aluminium.

On notera que les références 46,50,34 de la figure 3 désignent respectivement un joint annulaire plat, de la résine thermoconductrice et des tampons comme décrit dans le document WO02/29958.

Le joint 46 est interposé axialement entre le corps 19 et un épaulement non référencé du rebord du palier avant 18.

La résine est interposée radialement entre la périphérie interne du rebord du palier 18 et la périphérie externe du corps 19.

Des tampons 34 sont interposés axialement entre le corps 19 et un épaulement du rebord (non référencé) du palier arrière. Les tampons 34 sont en matière élastique comme le joint 46. Ils sont par exemple à base d'élastomère.

Les tampons 34 présentent des pattes 38 pour leur montage dans des logements complémentaires du palier arrière 16 comme visible dans le document WO02/29958. Un découplage mécanique entre le stator et les paliers 16,18 est ainsi obtenu, la résine 50 se déformant élastiquement dans le sens radial.

L'alternateur est ainsi moins bruyant. La résine 50 permet de bien évacuer la chaleur en sorte que le rotor, notamment le bobinage 62 de celui-ci, peut être plus puissant.

Tout ceci est rendu possible grâce à l'agencement de redressement 1 selon l'invention qui peut évacuer plus de chaleur.

Avantageusement on met en forme les bobinages électriques 23 et/ou 62 au moyen d'un outil de conformage qui exerce un effort sur au moins une zone d'un bobinage de façon à le déformer. Ici la taille du bobinage 62 est accrue, la périphérie externe de celui-ci ayant une forme convexe, en variante en tonneau en sorte que son volume est augmenté ainsi que la puissance de l'alternateur autorisée grâce à l'agencement 1 selon l'invention.

Pour plus de précisions on se reportera au document WO 02/29958, les bobinages 23,62 étant montés respectivement dans les encoches du corps 19 et sur le noyau 67 par l'intermédiaire d'une feuille isolante recouverte d'un matériau de liaison, tel qu'un polymère avantageusement du type thermodurcissable. Par chauffage on assure une liaison du bobinage 23,62 avec respectivement le corps 23 et le noyau 67.

On peut utiliser des épingles pour constituer le bobinage 62. Tout cela est possible grâce à l'agencement 1.

Grâce à l'invention, l'alternateur est plus puissant et peu bruyant. Bien entendu la présence de la résine 50, des tampons 34 et du joint 46 n'est pas obligatoire. De même, comme décrit dans le document FR 01 07178 déposé le 31/05/2001, le bobinage 62 est en variante réalisé par enroulement de l'élément conducteur sur un élément tubulaire monté sur le noyau 67 alors en deux parties ; chaque partie étant issue d'un des plateaux 66, 64.

## Revendications

1. Machine électrique tournante du type comprenant un stator (12) avec des enroulements, un rotor (13) doté d'un arbre rotatif (15), un palier avant et un palier arrière, dans lesquels est monté rotatif l'arbre de rotor, un agencement de redressement (1) du courant produit par la machine électrique tournante, qui comprend une pluralité de diodes positives supportées par un dissipateur de chaleur en forme générale de plaque de support et une pluralité de diodes négatives supportées par des moyens de support en forme de plaque, ces plaques étant axialement juxtaposées en étant fixées sur le palier arrière, et un dispositif de refroidissement par circulation d'un fluide de refroidissement à travers des ouvertures de la plaque (9) de support des diodes positives, la plaque (9) de support des diodes positives (8) étant pourvue de nervures de refroidissement qui présentent la forme d'ailettes (118,119) s'étendant sur la plaque de support, des ouvertures (120) de passage du fluide de refroidissement étant prévues entre des ailettes (118,119), **caractérisée en ce que** certaines de ces ailettes (118) s'étendent sensiblement jusqu'à la périphérie extérieure de la plaque (9) de support des diodes positives (8),
et la plaque (9) de support des diodes positives est séparée de la plaque de support des diodes négatives par une plaque intermédiaire (113) permettant de connecter les diodes positives et négatives, cette plaque intermédiaire (113) comportant un corps en matériau électriquement isolant et étant configurée pour assurer un libre passage de fluide de refroidissement à travers des ouvertures (120) de passage de l'air de refroidissement de la plaque (9) de support des diodes positives, la machine comportant en outre un capot (27), notamment en forme de coupelle, destiné à coiffer sensiblement l'agencement de redressement (1), ce capot (27) comprenant au-dessus de la plaque (9) de support des diodes positives une partie ajourée, les ailettes de la plaque (9) de support des diodes positives faisant saillie de la face de la plaque (9) en regard du capot (27).

2. Machine selon la revendication 1, **caractérisée en ce qu'**au moins deux diodes positives (8) sont disposées près de la périphérie extérieure de la plaque (9) de support des diodes positives (8) et **en ce que** des ailettes (119) s'étendent jusqu'à proximité de ces diodes.

3. Machine selon la revendication 2, **caractérisée en ce que** les ouvertures (120) dans la plaque (9) de support des diodes positives (8) constituent avec les ailettes (118,119) adjacentes des canaux d'écoulement accéléré du liquide de refroidissement.

4. Machine selon la revendication 1, **caractérisée en ce qu'**au moins une première ailette (118) qui s'étend radialement jusqu'à la périphérie externe de la plaque de support (9) est à proximité d'une diode positive (8).

5. Machine selon la revendication 4, **caractérisé en ce que** la plaque de support (9) présente au niveau de la diode positive une surépaisseur.

6. Machine selon l'une quelconque des revendications précédentes, **caractérisée par le fait que** les diodes positives sont emmanchées à force dans la plaque (9).

## Claims

1. Rotary electric machine of the type comprising a stator (12) with windings, a rotor (13) which is provided with a rotary shaft (15), a front bearing and a rear bearing in which the rotor shaft is fitted such as to rotate, a device (1) for rectifying the current produced by the rotary electric machine, which comprises a plurality of positive diodes which are supported by a heat dissipater in the general form of a support plate, and a plurality of negative diodes which are supported by support means in the form of a plate, these plates being juxtaposed axially whilst being secured to the rear bearing, and a device for cooling by circulation of a cooling fluid through openings in the plate (9) for support of the positive diodes, the plate (9) for support of the positive diodes (8) being provided with cooling ribs which are in the form of fins (118, 119) which extend on the support plate, openings (120) for passage of cooling fluid being provided between fins (118, 119), **characterised in that** some of these fins (118) extend substantially as far as the outer periphery of the plate (9) for support of the positive diodes (8), and the plate (9) for support of the positive diodes is separated from the plate for support of the negative diodes by an intermediate plate (113) which makes it possible to connect the positive and negative diodes, this intermediate plate (113) comprising a body made of electrically insulating material, and being configured in order to assure free passage of cooling fluid through openings (120) for passage of the cooling air in the plate (9) for support of the positive diodes, the machine additionally comprising a cover (27), in particular in the form of a cup, which is designed to cover the rectifying device (1) substantially, this cover (27) comprising a perforated part above the plate (9) for support of the positive diodes, with the fins of the plate (9) for support of the positive diodes projecting from the surface of the plate (9) opposite the cover (27).

2. Machine according to claim 1, **characterised in that** at least two positive diodes (8) are disposed close to the outer periphery of the plate (9) for support of the positive diodes (8), and **in that** fins (119) extend as far as the vicinity of these diodes.

3. Machine according to claim 2, **characterised in that** the openings (120) in the plate (9) for support of the positive diodes (8) constitute together with the adjacent fins (118, 119) channels for accelerated flow of the cooling fluid.

4. Machine according to claim 1, **characterised in that** at least one first fin (118) which extends radially as far as the outer periphery of the support plate (9) is in the vicinity of a positive diode (8).

5. Machine according to claim 4, **characterised in that** the support plate (9) has an additional thickness at the level of the positive diode.

6. Machine according to any one of the preceding claims, **characterised in that** the positive diodes are forced into the plate (9).

## Patentansprüche

1. Rotierende elektrische Maschine, umfassend einen Stator (12) mit Wicklungen, einen Rotor (13) mit einer rotierenden Welle (15), einen vorderen Lagerschild und einen hinteren Lagerschild, denen die Rotorwelle drehbar gelagert ist, eine Gleichrichteranordnung (1) zum Gleichrichten des durch die rotierende elektrische Maschine erzeugten Stroms, die mehrere Plusdioden, die auf einem Kühlkörper mit der allgemeinen Form einer Trägerplatte angebracht sind, und mehrere Minusdioden umfasst, die auf Tragermitteln in Form einer Platte angebracht sind, wobei diese Platten axial nebeneinander angeordnet und auf dem hinteren Lagerschild befestigt sind, und eine Kühlvorrichtung zur Kühlung durch Zirkulation eines Kühlmittels durch Öffnungen der Trägerplatte (9) der Plusdioden, wobei die Trägerplatte (9) der Plusdioden (8) mit Kühlrippen versehen ist, welche die Form von Stegen (118, 119) aufweisen, die sich auf der Trägerplatte erstrecken, während Öffnungen (120) für den Durchgang des Kühlmittels zwischen Stegen (118, 119) vorgesehen sind, **dadurch gekennzeichnet, dass** sich einige dieser Stege (118) in etwa bis zum äußeren Umfang der Trägerplatte (9) der Plusdioden (8) erstrecken und die Trägerplatte (9) der Plusdioden von der Trägerplatte der Minusdioden durch eine Zwischenplatte (113) getrennt ist, die den Anschluss der Plus und Minusdioden ermöglicht, wobei diese Zwischenplatte (113) einen Körper aus einem elektrisch nichtleitenden Werkstoff umfasst und so gestaltet ist, dass ein freier Durchgang des Kühlmittels durch die Öffnungen (120) für den Durchgang der Kühlluft der Trägerplatte (9) der Plusdioden gewährleistet ist, wobei die Maschine außerdem eine, insbesondere Schalenförmige, Abdeckkappe (27) umfasst, die dazu bestimmt ist, die Gleichrichteranordnung (1) weitgehend abzudecken, wobei diese Abdeckkappe (27) oberhalb der Trägerplatte (9) der Plusdioden einen durchbrochenen Teil aufweist, wobei die Stege der Trägerplatte (9) der Plusdioden über die Fläche der Platte (9) gegenüber der Abdeckkappe (27) vorstehen.

2. Maschine nach Anspruch 1, **dadurch gekennzeichnet dass** wenigstens zwei Plusdioden (8) nahe dem äußeren Umfang der Trägerplatte (9) der Plusdioden (8) angeordnet sind und dass sich Stege (119) bis in die Nähe dieser Dioden erstrecken,

3. Maschine nach Anspruch 2, **dadurch gekennzeichnet, dass** die Öffnungen (120) in der Trägerplatte (9) der Plusdioden (8) zusammen mit den benachbarten Stegen (118, 119) Kanäle für eine beschleunigte Strömung der Kühlfüssigkeit bilden.

4. Maschine nach Anspruch 1, **dadurch gekennzeichnet, dass** sich wenigstens ein erster Steg (118), der sich radial bis zum äußeren Umfang der Trägerplatte (9) erstreckt, in der Nähe einer Plusdiode (8) befindet

5. Maschine nach Anspruch 4, **dadurch gekennzeichnet, dass** die Trägerplatte (9) in Höhe der Plusdiode eine Erhebung aufweist.

6. Maschine nach einem der vorangehenden Ansprüche, **dadurch gekennzeichnet, dass** die Plusdioden fest in die Platte (9) eingesteckt sind.
